# EUROPÄISCHE PATENTANMELDUNG

(11) **EP 4 530 230 A1**
(43) Veröffentlichungstag der Anmeldung: **02.04.2025**
(21) Anmeldenummer: 24202289.5
(22) Anmeldetag: 24.09.2024
(51) Int. Cl.: B65G 19/14, B65G 23/06

(54) **FÖRDERSYSTEM ZUR FÖRDERUNG VON SCHÜTTGUT**

(30) Priorität: 26.09.2023 DE 102023126095; 19.02.2024 DE 202024100790 U
(71) Anmelder: Wessjohann fördertechnische Anlagen GmbH, 49692 Cappeln (DE)
(72) Erfinder: Wessjohann, Hubertus, 49692 Cappeln (DE)
(74) Vertreter: Völler-Blumenroth, Johannes Florian

(57) **Zusammenfassung**

Die Erfindung betrifft ein Fördersystem zur Förderung von Schüttgut. Das Fördersystem umfasst eine zum Umlaufen in eine Umlaufrichtung ausgebildete Mitnehmervorrichtung, die zumindest ein biegeschlaffes Zugelement und mehrere am Zugelement angeordnete Mitnehmerelemente, die sich quer zur Umlaufrichtung vom Zugelement wegerstrecken, aufweist. Außerdem umfasst das Fördersystem ein zur Umlenkung der Mitnehmervorrichtung drehbar um eine Umlenkdrehachse gelagertes Umlenkrad, das einen metallischen ersten Umlenkradabschnitt umfasst und mit einer von der Umlenkdrehachse abgewandten Kontaktfläche an der Mitnehmervorrichtung anliegt. Erfindungsgemäß ist die Kontaktfläche zumindest teilweise von einem aus Kunststoff ausgebildeten zweiten Umlenkradabschnitt des Umlenkrades ausgebildet.

## Beschreibung

Die Erfindung betrifft ein Fördersystem zur Förderung von Schüttgut. Das Fördersystem umfasst eine Mitnehmervorrichtung, die zu einem Umlaufen in eine Umlaufrichtung ausgebildet ist. Die Mitnehmervorrichtung weist zumindest ein biegeschlaffes Zugelement und mehrere am Zugelement angeordnete Mitnehmerelemente auf. Die Mitnehmerelemente erstrecken sich quer zur Umlaufrichtung vom Zugelement weg. Außerdem umfasst das Fördersystem ein Umlenkrad. Das Umlenkrad ist zur Umlenkung der Mitnehmervorrichtung drehbar um eine Umlenkdrehachse gelagert. Das Umlenkrad umfasst einen metallischen ersten Umlenkradabschnitt. Das Umlenkrad liegt mit einer von der Umlenkdrehachse abgewandten Kontaktfläche an der Mitnehmervorrichtung an.

Ein derartiges Fördersystem ist bekannt. Es wird beispielsweise zur Förderung von Tierfutter genutzt. Bei dem bekannten Fördersystem ist die Kontaktfläche von dem metallischen ersten Umlenkradabschnitt ausgebildet. Nachteilig an dem bekannten Fördersystem ist ein erheblicher Verschleiß des Umlenkrades im Bereich der Kontaktfläche aufgrund der während der Umlenkung an der Kontaktfläche anliegenden und sich relativ zum Umlenkrad bewegenden Mitnehmervorrichtung. Der Verschleiß bedeutet eine Beeinträchtigung der Form des Umlenkrades und damit der Umlenkung der Mitnehmervorrichtung. Aufgrund des Verschleißes ist das Umlenkrad regelmäßig auszutauschen, was mit erheblichem Aufwand und erheblichen Ausfallzeiten des Fördersystems verbunden ist.

Aufgabe der vorliegenden Erfindung ist die Bereitstellung eines zuverlässigen Fördersystems, durch das die vorbeschriebenen Nachteile vermieden werden.

Erfindungsgemäß weist das Umlenkrad einen zweiten Umlenkradabschnitt auf, der von/aus einem Kunststoff ausgebildet ist. Dieser zweite Umlenkradabschnitt bildet die Kontaktfläche zumindest teilweise, insbesondere vollständig, aus. Bei dem Kunststoff handelt es sich insbesondere um ein Polyurethan. Durch diese Ausbildung der Kontaktfläche ist eine erheblich höhere Abriebfestigkeit des Umlenkrades im Bereich der Kontaktfläche erreicht. Der im Betrieb des Fördersystems auftretende Verschleiß des Umlenkrades ist dadurch erheblich reduziert. Ein verschleißbedingter Austausch des Umlenkrades ist durch die erfindungsgemäße Ausbildung des Fördersystems weitgehend zu vermeiden. Dabei wird die notwendige Stabilität des Umlenkrades durch den metallischen ersten Umlenkradabschnitt erhalten.

Das erfindungsgemäße Fördersystem dient insbesondere zur Förderung von Schüttgut aus einem Silo zu einem oder mehreren Abgabebereichen. Das Fördersystem weist bevorzugt mehrere entlang des Verlaufs der Mitnehmervorrichtung verteilt angeordnete Umlenkräder auf und zumindest ein Antriebsrad auf, um das Umlaufen der Mitnehmervorrichtung entlang des gewünschten Weges zu erreichen. Das vorbeschriebene Umlenkrad bildet insbesondere eine Umlenkstation des Fördersystems mit aus, in der die Mitnehmervorrichtung beispielsweise um 90° umgelenkt wird.

Bei dem Fördersystem handelt es sich bevorzugt um einen Rohrketten- oder Rohrseilförderer. Das Zugelement ist somit bevorzugt als Kette oder Seil ausgebildet. Das Zugelement erstreckt sich länglich in die Umlaufrichtung. Die Mitnehmerelemente sind insbesondere in die Umlaufrichtung gleichmäßig voneinander beabstandet an dem Zugelement angeordnet. Die Mitnehmerelemente sind bevorzugt aus Kunststoff ausgebildet und an das Zugelement angespritzt. Besonders bevorzugt sind die Mitnehmerelemente achsensymmetrisch und/oder in die Umlaufrichtung betrachtet rund ausgebildet.

Das Fördersystem umfasst insbesondere eine Gehäusevorrichtung. Die Gehäusevorrichtung umgibt zumindest die Mitnehmervorrichtung derart, dass im Betrieb schwerkraftbedingt auf der Gehäusevorrichtung aufliegendes Schüttgut durch die Mitnehmerelemente in die Umlaufrichtung mitgeschleppt wird. Vor und hinter dem Umlenkrad angeordnete Teile der Mitnehmervorrichtung sind insbesondere von Rohren der Gehäusevorrichtung umgeben, deren Innendurchmesser den Außendurchmesser der Mitnehmerelemente nur geringfügig (um höchstens 20 % des Außendurchmessers) übersteigt. Im Bereich des Umlenkrades sind die Rohre bevorzugt mit zwei Gehäuseschalen der Gehäusevorrichtung verbunden, die das Umlenkrad und den umgelenkten Teil der Mitnehmervorrichtung einschließen.

Der erste Umlenkradabschnitt ist insbesondere aus gegossenem Stahl oder Edelstahl ausgebildet. An dem ersten Umlenkradabschnitt ist insbesondere zumindest ein Drehlager angeordnet, durch das das Umlenkrad drehbar um die Umlenkdrehachse auf einer Welle gelagert ist. Der erste Umlenkradabschnitt ist in radialer Richtung von der Kontaktfläche bevorzugt beabstandet, hat also bezogen auf die Umlenkdrehachse einen kleineren Radius als der zweite Umlenkradabschnitt. Der erste Umlenkradabschnitt und der zweite Umlenkradabschnitt liegen unmittelbar aneinander an und erstrecken sich bevorzugt jeweils vollständig um die Umlenkdrehachse.

Vorzugsweise ist der zweite Umlenkradabschnitt durch Anspritzen des Kunststoffes an den ersten Umlenkradabschnitt ausgebildet. insbesondere bei Verwendung von Polyurethan haftet der Kunststoff ohne weiteres selbstständig an dem ersten Umlenkradabschnitt. Der zweite Umlenkradabschnitt ist insbesondere einteilig ausgebildet. Durch das Anspritzen sind mit wenig Aufwand hohe Fertigungsgenauigkeiten zu erreichen, die das Ausfallrisiko des Umlenkrades verringern. Alternativ zum Anspritzen ist eine anderweitige unlösbare oder lösbare Verbindung zwischen den Umlenkradabschnitten denkbar.

Vorzugsweise ist der zweite Umlenkradabschnitt als starrer Körper ausgebildet. Der starre Körper wird insbesondere durch das Aushärten des Kunststoffs erreicht. Durch die Ausbildung als starrer Körper hat der zweite Umlenkradabschnitt selbst eine erhebliche Stabilität und bewirkt eine langlebige Abriebfestigkeit und grenzt sich dadurch von einer reinen Kunststoffbeschichtung des ersten Umlenkradabschnittes ab. In einem Schnitt mit einer Schnittebene, in der die Umlenkdrehachse liegt, variiert insbesondere der Abstand zwischen einer Außenkontur des ersten Umlenkradabschnittes und einer Außenkontur des zweiten Umlenkradabschnittes.

Der zweite Umlenkradabschnitt ist bevorzugt derart ausgebildet, dass zumindest ein der Kontaktfläche zugewandtes Ende des ersten Umlenkradabschnittes in dem Schnitt von dem zweiten Umlenkradabschnitt umfasst ist. Das Ende des ersten Umlenkradabschnittes erstreckt sich besonders bevorzugt in eine umlaufende und im Schnitt U-förmige Ausnehmung im zweiten Umlenkradabschnitt hinein. Der zweite Umlenkradabschnitt liegt also an zwei sich gegenüberliegenden Oberflächen des ersten Umlenkradabschnittes an. Durch diese Ausbildung ist eine besonders belastbare und zumindest in axialer Richtung formschlüssige Verbindung zwischen den beiden Umlenkradabschnitten erreicht, die das Ausfallrisiko verringert.

Vorzugsweise greift der zweite Umlenkradabschnitt zur Ausbildung einer (weiteren) formschlüssigen Verbindung zwischen dem ersten Umlenkradabschnitt und dem zweiten Umlenkradabschnitt in zumindest eine durch den ersten Umlenkradabschnitt ausgebildete Ausnehmung ein. Insbesondere wird der Kunststoff auch in die Ausnehmung eingespritzt. Bei der Ausnehmung handelt es sich bevorzugt um eine Bohrung, insbesondere um eine sich in Bezug auf die Umlenkdrehachse axial erstreckende Durchgangsbohrung, im ersten Umlenkradabschnitt. Durch die formschlüssige Verbindung lässt sich ein Drehmoment besonders zuverlässig von dem zweiten Umlenkradabschnitt auf den ersten Umlenkradabschnitt übertragen.

Bevorzugt ist eine Breite des zweiten Umlenkradabschnittes, insbesondere der Kontaktfläche, in einem Schnitt mindestens doppelt so groß, bevorzugt mindestens 5-fach so groß, wie eine Breite des der Kontaktfläche zugewandten Endes des ersten Umlenkradabschnittes. Die Breiten werden dabei parallel zur Umlenkdrehachse gemessen. Der Schnitt hat eine Schnittebene, in der die Umlenkdrehachse liegt. Durch den erheblichen Breitenunterschied lässt sich der erste Umlenkradabschnitt einfach vor Kontakt mit weiteren Bauteilen oder dem Schüttgut, der Verschleiß verursachen würde, schützen. Außerdem lässt sich die Kontaktfläche in der für die Mitnehmerelemente notwendigen Breite ausbilden, ohne dass dazu der metallische Abschnitt des Umlenkrades breiter ausfallen muss, als zur Stabilisierung des Umlenkrades notwendig. Bevorzugt hat das Ende des ersten Umlenkradabschnittes von der Kontaktfläche einen Abstand, der größer ist als die Breite des Endes, so dass selbst bei einem geringfügigen Verschleiß des zweiten Umlenkradabschnittes im Bereich der Kontaktfläche noch ein Kontakt zwischen dem ersten Umlenkradabschnitt und der Mitnehmervorrichtung vermieden wird.

Die Breite des zweiten Umlenkradabschnittes nimmt in einem Schnitt mit wachsendem Abstand von der Umlenkdrehachse zumindest abschnittsweise zu. Dies gilt insbesondere ausgehend vom Ende des ersten Umlenkradabschnittes. Der Schnitt hat eine/die Schnittebene, in der die Umlenkdrehachse liegt. Durch die allmähliche Erhöhung der Breite lässt sich die notwendige Stabilität des Umlenkrades im Bereich der Kontaktfläche ohne unnötigen Materialaufwand erreichen.

Vorzugsweise weist der erste Umlenkradabschnitt zwischen der Kontaktfläche und der Umlenkdrehachse ein Verstärkungselement auf. Das Verstärkungselement ist aus einem insbesondere ebenen Blech ausgebildet, dass rechtwinklig zur Umlenkdrehachse orientiert ist und geschlossen ausgebildet ist oder Ausnehmungen aufweist. Das Verstärkungselement hat insbesondere eine Stärke vom 5 mm. Die Konturen des Verstärkungselementes sind insbesondere durch ein Lasern des Bleches ausgebildet. Das Verstärkungselement bildet vorzugsweise das vorgenannte Ende des ersten Umlenkradabschnittes aus. Das Verstärkungselement hat in einem Schnitt mit einer zur Umlenkdrehachse rechtwinkligen Schnittebene bevorzugt eine zumindest im Wesentlichen runde Außenkontur, die besonders bevorzugt entlang des gesamten Umfanges von der Kontaktfläche beabstandet ist. In einem/dem Schnitt mit einer Schnittebene, in der die Umlenkdrehachse liegt, ist das Verstärkungselement insbesondere mittig unterhalb der Kontaktfläche angeordnet. Durch das derart ausgebildete Verstärkungselement wird die Stabilität des Umlenkrades auf einfache Weise sichergestellt.

Bevorzugt weist das Verstärkungselement einen äußeren Ring und einen zwischen dem äußeren Ring und der Umlenkdrehachse angeordneten inneren Ring auf. Beide Ringe umgeben die Umlenkdrehachse dabei vollständig. Außerdem weist das Verstärkungselement in diesem Fall mehrere den äußeren Ring mit dem inneren Ring verbindende Streben auf. Zwischen den Streben sind insbesondere Ausnehmungen angeordnet, die sich vom äußeren Ring bis zum inneren Ring erstrecken und durch die das Gewicht des Verstärkungselementes erheblich zu reduzieren ist. In dem Schnitt mit der Schnittebene, die rechtswinklig zur Umlenkdrehachse angeordnet ist, oder einer Seitenansicht erstrecken sich die Streben bevorzugt bogenförmig. Mit der Seitenansicht ist eine zur Umlenkdrehachse parallele Blickrichtung gemeint. Der vorbeschriebene Aufbau des Verstärkungselementes ermöglicht einen bestmöglichen Kompromiss zwischen Stabilität und Materialaufwand, wobei gerade die bogenförmigen Streben optimal für die Übertragung des Drehmoments mit gleichbleibendem Vorzeichen ausgelegt sind. Besonders bevorzugt weist auch der zweite Umlenkradabschnitt einen äußeren Ring, zumindest einen inneren Ring und Streben auf, die die Ringe des zweiten Umlenkradabschnittes miteinander verbinden. Konkret liegt der zweite Umlenkradabschnitt insbesondere an zwei sich gegenüberliegenden Strebenoberflächen zumindest einer der Streben des ersten Umlenkradabschnittes an. In diesem Fall umgeben Streben des zweiten Umlenkradabschnittes zumindest eine der Streben des Umlenkradabschnittes zumindest bezogen auf die axiale Richtung.

Der zweite Umlenkradabschnitt bildet insbesondere auf zumindest einer seiner Streben oder als Teil zumindest einer seiner Streben zumindest eine Verstärkungsrippe aus. Diese steht in eine zur Umlenkdrehachse parallele Richtung von der zugeordneten Strebe des ersten Umlenkradabschnittes ab und hat zwischen der Umlenkdrehachse und der Kontaktfläche einen Verlauf, der zumindest im Wesentlichen dem Verlauf der Strebe entspricht. Die Verstärkungsrippe erstreckt sich insbesondere bis an die Kontaktfläche, wird also besonders bevorzugt durch den äußeren Ring des zweiten Umlenkradabschnittes mit ausgebildet. Die Verstärkungsrippe stellt die Stabilität des Umlenkrades gegenüber seitlichen Belastungen auch bei einem nur dünnen Verstärkungselement des ersten Umlenkradabschnittes sicher.

Der erste Umlenkradabschnitt weist zwischen dem Verstärkungselement und der Umlenkdrehachse bevorzugt ein Buchsenelement auf. Das Buchsenelement steht in eine zur Umlenkdrehachse parallele Richtung über das Verstärkungselement über und umgibt die Umlenkdrehachse. das Buchsenelement ist mit einer Bohrung zur Lagerung des Umlenkrades versehen und hat insbesondere die Form einer Buchse oder Hülse. Das Verstärkungselement ist entlang der axialen Erstreckung des Buchsenelementes insbesondere zumindest im Wesentlichen mittig auf dem Buchsenelement angeordnet. Die axiale Erstreckung des Buchsenelementes entspricht bevorzugt zumindest im Wesentlichen der axialen Erstreckung des zweiten Umlenkradabschnittes. Das Buchsenelement und das Verstärkungselement können ein- oder zweiteilig ausgebildet sein. Das Buchsenelement stellt bei Verwendung des wie vorstehend beschrieben ausgebildeten Verstärkungselementes eine zuverlässige Lagerung des Umlenkrades sicher.

Vorzugsweise weist die Kontaktfläche in einem Schnitt mit einer Schnittebene, in der die Umlenkdrehachse liegt, einen mittleren Kontaktflächenabschnitt und zwei äußere Kontaktflächenabschnitte auf, die den mittleren Kontaktflächenabschnitt umgeben. Die äußeren Kontaktflächenabschnitte sind dabei weiter von der Umlenkdrehachse beabstandet als der mittlere Kontaktflächenabschnitt. Insbesondere ist die Kontaktfläche in diesem Schnitt konkav ausgebildet. Durch diese Form der Kontaktfläche wird ein unbeabsichtigtes Lösen der Mitnehmervorrichtung von dem Umlenkrad verhindert.

Der zweite Umlenkradabschnitt bildet bevorzugt an die Kontaktfläche angrenzende oder auf der Kontaktfläche angeordnete Mitnehmerstege aus, die sich parallel zur Umlenkachse länglich erstrecken, insbesondere zwischen den äußeren Kontaktflächenabschnitten. An diese Mitnehmerstege können sich die Mitnehmerelemente zur erleichterten Drehmomentübertragung anlegen.

Vorstehend wurden wiederholt Schnitte mit Schnittebenen genannt, in der die Umlenkdrehachse liegt. Bei diesen Schnittebene kann es sich um bezogen auf das Umlenkrad diesselbe Schnittebene oder um unterschiedliche, um die Umlenkdrehachse relativ zueinander verschwenkte Schnittebenen handeln.

Weitere Einzelheiten und Vorteile der Erfindung gehen aus den schematisch dargestellten Figuren hervor; es zeigen:
- Fig. 1:: eine perspektivische Darstellung eines erfindungsgemäßen Fördersystems,
- Fig. 2: die perspektivische Darstellung des Fördersystems gemäß Fig. 1 ohne eine vordere Gehäusehalbschale,
- Fig. 3:: eine Explosionsdarstellung des Fördersystems gemäß den vorhergehenden Figuren,
- Fig. 4:: eine perspektivische Darstellung eines Umlenkrades des Fördersystems gemäß den vorhergehenden Figuren,
- Fig. 5:: eine Frontansicht des Umlenkrades gemäß Fig. 4,
- Fig. 6:: eine Seitenansicht des Umlenkrades gemäß den Fig. 4 und 5,
- Fig. 7:: einen Querschnitt des Umlenkrades gemäß den Fig. 4 bis 6,
- Fig. 8:: einen Längsschnitt des Umlenkrades gemäß den Fig. 4 bis 7.

Gleich oder ähnlich wirkende Teile sind, sofern sachdienlich, mit identischen Bezugsziffern versehen. Die einzelnen technischen Merkmale der nachfolgend beschriebenen Ausführungsformen können auch in Kombination mit den vorbeschriebenen Merkmalen zur erfindungsgemäßen Weiterbildung führen.

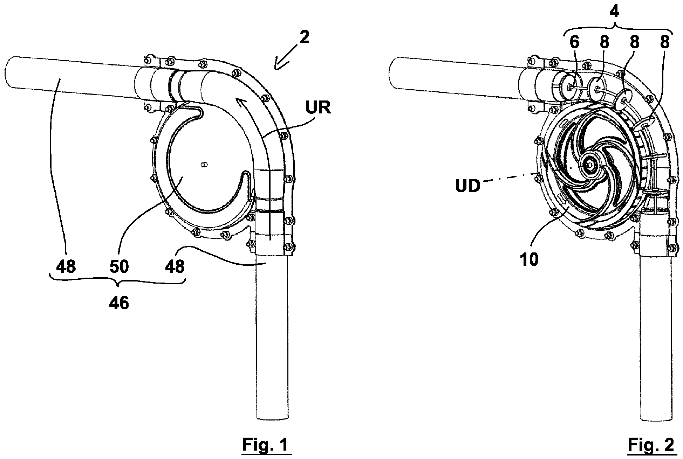

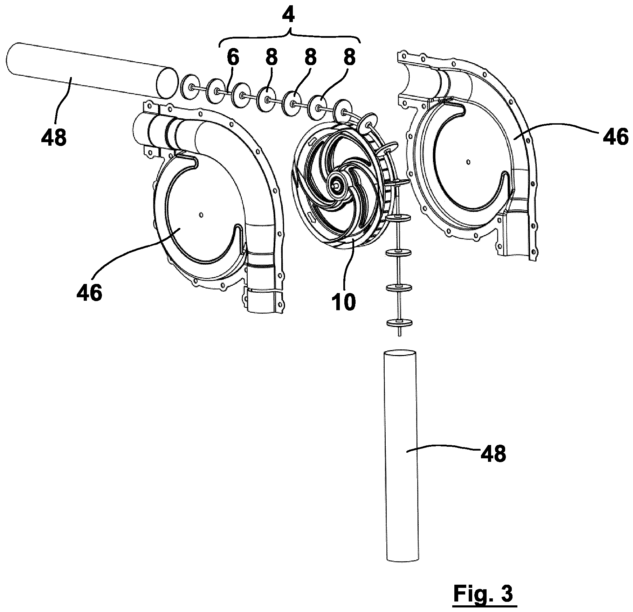

Die Fig. 1 bis 8 veranschaulichen ein erfindungsgemäßes Fördersystem 2 bzw. Teile davon. Das Fördersystem 2 dient zur Förderung von Schüttgut. Das Fördersystem 2 umfasst eine Mitnehmervorrichtung 4. Die Mitnehmervorrichtung 4 umfasst ein als Drahtseil ausgebildetes, biegeschlaffes Zugelement 6 und mehrere am Zugelement 6 angeordnete Mitnehmerelemente 8 (sh. insbesondere Fig. 2). Die Mitnehmerelemente 8 sind im Querschnitt rund und erstrecken sich quer zu einer Umlaufrichtung UR, in die die Mitnehmervorrichtung 4 im Betrieb umläuft, vom Zugelement 6 weg. Neben der Mitnehmervorrichtung 4 umfasst das Fördersystem 2 ein Umlenkrad 10. Das Umlenkrad 10 dient zur Umlenkung der Mitnehmervorrichtung 4 und ist dazu drehbar um eine Umlenkdrehachse UR gelagert. Einzelheiten des Umlenkrades 10 werden nachfolgend beschrieben.

Weiterhin umfasst das Fördersystem 2 eine Gehäusevorrichtung 46. Die Gehäusevorrichtung 46 umfasst zwei Rohre 48, durch die ein sich auf das Umlenkrad 10 zubewegender Abschnitt der Mitnehmervorrichtung 4 bzw. ein sich vom Umlenkrad 10 wegbewegender Abschnitt der Mitnehmervorrichtung 4 im Betrieb bewegt (sh. Fig. 1 bis 3). Neben den Rohren 48 umfasst die Gehäusevorrichtung 46 zwei Gehäusehalbschalen 50, die einen sich zwischen Rohren 48 erstreckenden Abschnitt der Mitnehmervorrichtung 4 und das Umlenkrad 10 umschließen, wobei in Fig. 2 nur eine der Gehäuseschalen 50 dargestellt ist.

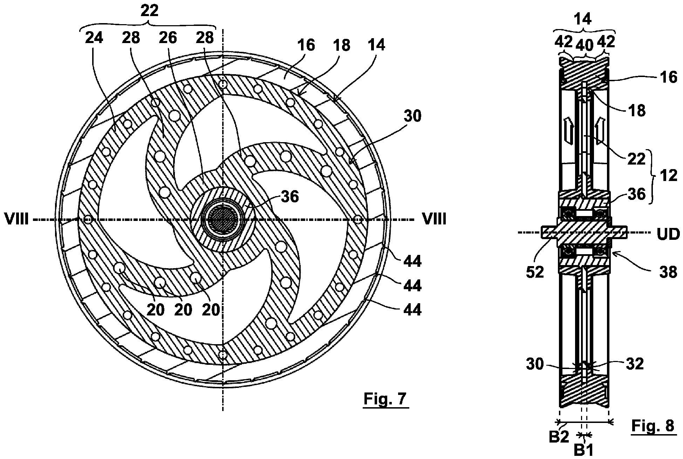

Das Umlenkrad 10 weist einen metallischen ersten Umlenkradabschnitt 12 und einen aus Kunststoff ausgebildeten zweiten Umlenkradabschnitt 16 auf (sh. insbesondere Fig. 7 und 8). Der zweite Umlenkradabschnitt 16 bildet eine von der Umlenkdrehachse UD abgewandte Kontaktfläche 14 aus, an der die Mitnehmervorrichtung 4 anliegt. Der zweite Umlenkradabschnitt 16 ist an dem ersten Umlenkradabschnitt 12 derart angespritzt, dass ein Großteil des ersten Umlenkradabschnittes 12 einschließlich eines der Kontaktfläche 14 zugewandten Endes 18 des ersten Umlenkradabschnittes 12 von dem zweiten Umlenkradabschnitt 16 umfasst ist (sh. insbesondere Fig. 8). Der zweite Umlenkradabschnitt 16 ist zur Ausbildung einer formschlüssigen Verbindung zwischen dem ersten Umlenkradabschnitt 12 und dem zweiten Umlenkradabschnitt 16 in mehrere Ausnehmungen 20 im ersten Umlenkradabschnitt 12 eingespritzt (sh insbesondere Fig. 7).

Der erste Umlenkradabschnitt 12 weist zwischen der Kontaktfläche 14 und der Umlenkdrehachse UD ein Verstärkungselement 22 auf. Das Verstärkungselement 22 ist aus einem rechtwinklig zur Umlenkdrehachse UD ebenen Blech ausgebildet und weist die Ausnehmungen 20 auf. Zwischen dem Verstärkungselement 22 und der Umlenkdrehachse UD weist der erste Umlenkradabschnitt 12 ein Buchsenelement 36 mit einer Bohrung 38 auf. Das Buchsenelement 36 steht bezogen auf die Umlenkdrehachse UD in beiden axialen Richtungen über das Verstärkungselement 22 über. Das Buchsenelement 36 ist an einer zur Gehäusevorrichtung 46 ortsfesten Welle 52 gelagert.

Das Verstärkungselement 22 weist einen äußeren Ring 24, einen zwischen dem äu-ßeren Ring 24 und der Umlenkdrehachse UD angeordneten inneren Ring 26 und mehrere den äußeren Ring 24 mit dem inneren Ring 26 verbindende Streben 28 auf (sh. insbesondere Fig. 7). Die Streben 28 haben in einer Seitenansicht eine bogenförmige Erstreckung. Der innere Ring 26 liegt in axialer Richtung an einer umlaufenden Rippe des Buchsenelementes 36 an.

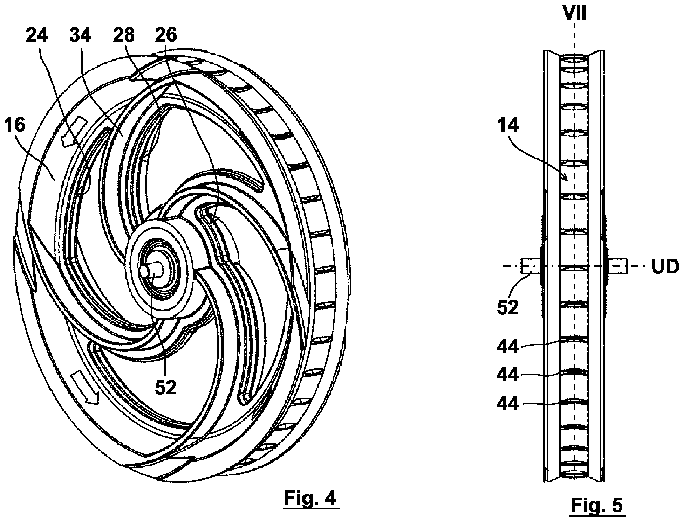

Der zweite Umlenkradabschnitt 16 ist derart ausgebildet, dass eine parallel zur Umlenkdrehachse UD gemessenen Breite B2 des zweiten Umlenkradabschnittes 16 im Schnitt gemäß Fig. 8 mindestens 5-fach so groß ist wie einen parallel gemessenen Breite B1 des der Kontaktfläche 14 zugeordneten Endes 18 des Verstärkungselementes 22. Zumindest zwischen den Streben 28 nimmt die Breite B2 des zweiten Umlenkradabschnittes 16, vom Ende 18 ausgehend, mit wachsendem Abstand von der Umlenkdrehachse UD zu. Der zweite Umlenkdrehabschnitt 16 bildet die Kontaktfläche 14 derart konkav aus, dass ein mittlerer Kontaktflächenabschnitt 40 von zwei äußeren Kontaktabschnitten 42 umgeben ist, die weiter von der Umlenkdrehachse UD beabstandet sind als der mittlere Kontaktflächenabschnitt 40 (sh. insbesondere Fig. 8). Der zweite Umlenkradabschnitt 16 bildet entlang seines Umfangs an die Kontaktfläche 14 angrenzende und sich parallel zur Umlenkdrehachse UD länglich erstreckende Mitnehmerstege 44 aus (sh. insbesondere Fig. 5).

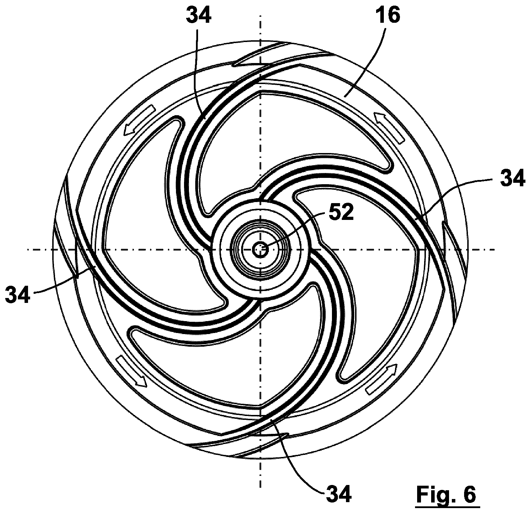

Der zweite Umlenkradabschnitt 16 liegt an zwei sich gegenüberliegenden Strebenoberflächen 30, 32 der Streben 28 an. Konkret bildet der zweite Umlenkradabschnitt 16 pro Strebe 28 zwei sich gegenüberliegende Verstärkungsrippen 34 aus (sh. insbesondere Fig. 4 und 6). Die Verstärkungsrippen 34 verlaufen entlang der jeweiligen Streben 28 bogenförmig und stehen in axialer Richtung von den Streben 28 ab.

## Patentansprüche

1. Fördersystem (2) zur Förderung von Schüttgut, umfassend eine zum Umlaufen in eine Umlaufrichtung (UR) ausgebildete Mitnehmervorrichtung (4), die zumindest ein biegeschlaffes Zugelement (6) und mehrere am Zugelement (6) angeordnete Mitnehmerelemente (8), die sich quer zur Umlaufrichtung (UR) vom Zugelement (6) wegerstrecken, aufweist, und ein zur Umlenkung der Mitnehmervorrichtung (4) drehbar um eine Umlenkdrehachse (UR) gelagertes Umlenkrad (10), das einen metallischen ersten Umlenkradabschnitt (12) umfasst und mit einer von der Umlenkdrehachse (UD) abgewandten Kontaktfläche (14) an der Mitnehmervorrichtung (4) anliegt, **dadurch gekennzeichnet, dass** die Kontaktfläche (14) zumindest teilweise von einem aus Kunststoff ausgebildeten zweiten Umlenkradabschnitt (16) des Umlenkrades (10) ausgebildet ist.

2. Fördersystem nach Anspruch 1, **dadurch gekennzeichnet, dass** der zweite Umlenkradabschnitt (16) durch Anspritzen des Kunststoffes an den ersten Umlenkradabschnitt (12) ausgebildet ist.

3. Fördersystem nach einem der vorhergehenden Ansprüche, **dadurch gekennzeichnet, dass** der zweite Umlenkradabschnitt (16) als starrer Körper ausgebildet ist.

4. Fördersystem nach einem der vorhergehenden Ansprüche, **dadurch gekennzeichnet, dass** der zweite Umlenkradabschnitt (16) derart ausgebildet ist, dass zumindest ein der Kontaktfläche (14) zugewandtes Ende (18) des ersten Umlenkradabschnittes (12) in einem Schnitt mit einer Schnittebene, in der die Umlenkdrehachse (UD) liegt, von dem zweiten Umlenkradabschnitt (16) umfasst ist.

5. Fördersystem nach einem der vorhergehenden Ansprüche, **dadurch gekennzeichnet, dass** der zweite Umlenkradabschnitt (16) zur Ausbildung einer formschlüssigen Verbindung zwischen dem ersten Umlenkradabschnitt (12) und dem zweiten Umlenkradabschnitt (16) in zumindest eine durch den ersten Umlenkradabschnitt (12) ausgebildete Ausnehmung (20) eingreift.

6. Fördersystem nach einem der vorhergehenden Ansprüche, **dadurch gekennzeichnet, dass** eine parallel zur Umlenkdrehachse (UD) gemessene Breite (B2) des zweiten Umlenkradabschnittes (16), insbesondere der Kontaktfläche (14), in einem Schnitt mit einer Schnittebene, in der die Umlenkdrehachse (UD) liegt, mindestens doppelt so groß, bevorzugt mindestens fünffach so groß, ist wie eine parallel zur Umlenkdrehachse (UD) gemessene Breite (B1) eines der Kontaktfläche (14) zugewandten Endes (18) des ersten Umlenkradabschnittes (12).

7. Fördersystem nach Anspruch 6, **dadurch gekennzeichnet, dass** die parallel zur Umlenkdrehachse (UD) gemessene Breite (B2) des zweiten Umlenkradabschnittes (16), insbesondere vom Ende (18) des ersten Umlenkradabschnittes (12) ausgehend, in einem Schnitt mit einer Schnittebene, in der die Umlenkdrehachse (UD) liegt, mit wachsendem Abstand von der Umlenkdrehachse (UD) zumindest abschnittsweise zunimmt.

8. Fördersystem nach einem der vorhergehenden Ansprüche, **dadurch gekennzeichnet, dass** der erste Umlenkradabschnitt (12) zwischen der Kontaktfläche (14) und der Umlenkdrehachse (UD) ein aus einem rechtwinklig zur Umlenkdrehachse (UD) ebenen Blech ausgebildetes Verstärkungselement (22) aufweist.

9. Fördersystem nach Anspruch 8, **dadurch gekennzeichnet, dass** das Verstärkungselement (22) einen äußeren Ring (24), einen zwischen dem äußeren Ring (24) und der Umlenkdrehachse (UD) angeordneten inneren Ring (26) und mehrere den äußeren Ring (24) mit dem inneren Ring (26) verbindende Streben (28) aufweist.

10. Fördersystem nach Anspruch 9, **dadurch gekennzeichnet, dass** die Streben (28) in einer Seitenansicht eine bogenförmige Erstreckung haben.

11. Fördersystem nach Anspruch 9 oder 10, **dadurch gekennzeichnet, dass** der zweite Umlenkradabschnitt (16) an zwei sich gegenüberliegenden Strebenoberflächen (30,32) zumindest einer der Streben (28) anliegt.

12. Fördersystem nach einem der Ansprüche 9 bis 11, **dadurch gekennzeichnet, dass** der zweite Umlenkradabschnitt (16) zumindest eine Verstärkungsrippe (34) ausbildet, die entlang zumindest einer der Streben (28) verläuft und in eine zur Umlenkdrehachse (UD) parallele Richtung von der Strebe (28) absteht.

13. Fördersystem nach einem der Ansprüche 8 bis 12, **dadurch gekennzeichnet, dass** der erste Umlenkradabschnitt (12) zwischen dem Verstärkungselement (22) und der Umlenkdrehachse (UD) ein in eine zur Umlenkdrehachse (UD) parallele Richtung über das Verstärkungselement (22) überstehendes und die Umlenkdrehachse (UD) umgebendes Buchsenelement (36) mit einer Bohrung (38) aufweist.

14. Fördersystem nach einem der vorhergehenden Ansprüche, **dadurch gekennzeichnet, dass** die Kontaktfläche (14) in einem Schnitt mit einer Schnittebene, in der die Umlenkdrehachse (UD) liegt, einen mittleren Kontaktflächenabschnitt (40) und zwei den mittleren Kontaktflächenabschnitt (40) umgebende äußere Kontaktflächenabschnitte (42) aufweist, die weiter von der Umlenkdrehachse (UD) beabstandet sind als der mittlere Kontaktflächenabschnitt (40).

15. Fördersystem nach einem der vorhergehenden Ansprüche, **dadurch gekennzeichnet, dass** der zweite Umlenkradabschnitt (16) an die Kontaktfläche (14), insbesondere an den mittleren Kontaktflächenabschnitt (40), angrenzende und sich parallel zur Umlenkdrehachse (UD) länglich erstreckende Mitnehmerstege (44) ausbildet.
